(19) Europäisches Patentamt
European Patent Office
Office européen des brevets

(11) **EP 2 254 781 B1**

(12) **EUROPÄISCHE PATENTSCHRIFT**

(45) Veröffentlichungstag und Bekanntmachung des Hinweises auf die Patenterteilung:
**11.01.2017   Patentblatt 2017/02**

(21) Anmeldenummer: **08873356.3**

(22) Anmeldetag: **25.11.2008**

(51) Int Cl.:
*B60W 20/00* (2016.01)   *B60K 6/44* (2007.10)
*B60K 6/48* (2007.10)   *B60W 10/06* (2006.01)
*B60W 10/08* (2006.01)

(86) Internationale Anmeldenummer:
**PCT/EP2008/066143**

(87) Internationale Veröffentlichungsnummer:
**WO 2009/112103 (17.09.2009 Gazette 2009/38)**

(54) **VERFAHREN UND ANORDNUNG ZUR STEUERUNG EINES FAHRZEUGES MIT HYBRIDANTRIEB**

METHOD AND ARRANGEMENT FOR CONTROLLING A VEHICLE WITH A HYBRID DRIVE

PROCÉDÉ ET DISPOSITIF POUR LA COMMANDE D'UN VÉHICULE À ENTRAÎNEMENT HYBRIDE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.03.2008   DE 102008000578**

(43) Veröffentlichungstag der Anmeldung:
**01.12.2010   Patentblatt 2010/48**

(73) Patentinhaber: **Robert Bosch GmbH**
**70442 Stuttgart (DE)**

(72) Erfinder:
• **HERNIER, Markus**
**70839 Gerlingen (DE)**
• **GREIS, Andreas**
**70193 Stuttgart (DE)**

(56) Entgegenhaltungen:
**WO-A-2005/012022       US-A1- 2003 160 455**
**US-A1- 2006 270 519**

**Beschreibung**

Stand der Technik

Die Erfindung betrifft ein Verfahren zur Steuerung eines Fahrzeuges mit einem Hybridantrieb gemäß dem Oberbegriff des Patentanspruchs 1, sowie eine Anordnung zur Durchführung des Verfahrens gemäß dem Patentanspruch 7.

Es werden verstärkt Fahrzeuge mit Hybridantrieb entwickelt, bei welchen verschiedene Antriebe für eine Antriebsaufgabe genutzt werden. Dabei können die einzelnen Motoren in dem Hybridantrieb unterschiedlich zusammenarbeiten.

Sie wirken entweder gleichzeitig oder es wirkt nur eine Antriebseinheit auf das zu bewegende Teil.

Der Dieselmotor kann in einem Hybridantriebsstrang als Verbrennungsmotor verwendet werden. Beim Einsatz von Dieselmotoren wird in hybriden Antriebssträngen in bestimmten Fahrsituationen der Verbrennungsmotor nach oder während einer Elektromotoren-Betriebsphase zu- bzw. abgeschaltet. Wenn das Zuschalten des Verbrennungsmotors nach oder während einer Elektromotoren-Betriebsphase zur Drehmomentenabgabe sehr schnell geschieht, erhöht sich die Dynamik des mager betriebenen Verbrennungsmotors.

Solche Betriebssituationen mit höherer Verbrennungsdynamik führen zu erhöhten Schadstoffemissionen, insbesondere Stickstoffemissionen.

Aus der US 2006/0270519 A1 sind ein Steuergerät und ein Verfahren zur Steuerung einer Fahrzeugantriebseinrichtung bekannt, wobei ein Verbrennungsmotor und zwei Elektromotoren zum Antrieb des Hybridfahrzeuges beitragen. Ein Hybridsteuergerät erzeugt ein Steuersignal für den Verbrennungsmotor und für die Elektromotoren. Das Hybridsteuergerät ist in unterschiedliche separate Sektionen aufgeteilt, wobei diese Sektionen die Steuerung des Verbrennungsmotors bzw. des Getriebes oder die Steuerung des Hybridantriebes betreffen. Zur Einstellung des Drehmomentes des Hybridantriebes wird durch das Hybridsteuergerät eine emissionsrelevante Steuerfunktion des Verbrennungsmotors in Form der Abgasrückführrate (AGR) bestimmt. In Abhängigkeit davon, ob die Abgasrückführrate einen vorgegebenen Abgasrückführratenschwellwert erreicht, wird der Verbrennungsmotor in einem bestimmten Lastzustand betrieben.

Aus der WO 2005/012022 A1 sind ein Verfahren und eine Vorrichtung zur Steuerung eines Diesel-Hybridfahrzeuges bekannt, bei welchem das Hybridfahrzeug einen Verbrennungsmotor und einen Elektromotor aufweist, welche zum Drehmoment des Antriebsstranges und somit zum Antrieb der Vorderräder des Hybridfahrzeuges beitragen. Ein elektronisches Steuergerät steuert alle strukturellen Elemente des Diesel-Hybridfahrzeuges an, was bedeutet, dass es sowohl den Verbrennungsmotor als auch den Elektromotor ansteuert. Um das Abgasverhalten des Verbrennungsmotors zu überprüfen, kontrolliert eine Verbrennungsmotorsteuereinheit, ob das von dem Verbrennungsmotor abgegebene Abgas eine Abgasgrenze überschreitet. Ist diese Abgasgrenze überschritten, aktiviert das elektronische Steuergerät den Elektromotor und senkt die Leistung des Verbrennungsmotors, so dass dieser wieder in einem Bereich unterhalb der Abgasgrenze arbeitet.

Die US 2003/0160455 A1 zeigt einen Verbrennungsmotor für einen Hybridantriebsstrang. Dieser Hybridantriebsstrang umfasst einen Motor sowie einen Elektromotor, welche von einem Steuergerät angesteuert werden. Das Steuergerät steuert den Motor sowie den Elektromotor so an, dass die Abgasemission des Hybridfahrzeuges reduziert wird.

Der Erfindung liegt somit die Aufgabe zugrunde, ein Verfahren zur Ansteuerung eines Fahrzeuges mit Hybridantrieb anzugeben, bei welchen in allen Betriebszuständen des Hybridantriebes die Schadstoffemissionen möglichst gering gehalten werden.

Der Vorteil der Erfindung besteht darin, dass die Schadstoffemissionen mit Hilfe von im Anspruch 1 genannten Funktionen minimiert werden, die ausschließlich den hybridspezifischen Betrieb berücksichtigen. Ausgewiesene hybridische Betriebssituationen sind Situationen bei denen Verbrennungsmotor und die zweite Antriebseinheit gleichzeitig im Einsatz sind oder Situationen, in denen von Betrieb der zweiten Antriebseinheit auf Verbrennungsmotorbetrieb oder umgekehrt umgeschaltet wird, wie das Zu- bzw. Abschalten des Verbrennungsmotors nach oder während einer Betriebsphase, in welcher die zweite Antriebseinheit Drehmoment abgibt oder aufnimmt.

Zumindest während des Hybridbetriebes des Fahrzeuges wird mindestens eine emissionsrelevante Steuerfunktion des Verbrennungsmotors von der Koordinierungseinheit ausgeführt, wodurch das Emissionsverhalten im Zusammenhang mit dem aktuellen Betriebszustand des Hybridantriebes bewertet und reguliert wird. Emissionsrelevante Funktionen sind beispielsweise die Ansteuerung des Einspritzsystems mit den Parametern des Einspritzdruckes, der Einspritzdauer und des Einspritzzeitpunktes oder die Steuerung und Regelung des Ladedruckes bei einem Dieselmotor.

Neben diesen genannten Funktionen wird für den Hybrid spezifischen Betrieb auch eine Abgasrückführrate als emissionsrelevante Funktion in der Koordinierungseinheit bestimmt.

Eine optimale Einstellung der Abgasrückführrate ist möglich, wenn die Abgasrückführrate in Abhängigkeit vom Beitrag des Verbrennungsmotors und vom Beitrag der Antriebseinheit zum Fahrzeugdrehmoment bestimmt wird.

Die zweite Antriebseinheit kann ein Elektromotor oder auch ein Hydraulikantrieb sein. Vorteilhafterweise wird mindestens eine Steuerfunktion für den Verbrennungsmotor von einer Koordinierungseinheit durchgeführt, welche bestimmt, zu welchem Zeitpunkt der Verbrennungsmotor bzw. die Antriebseinheit allein oder der Verbrennungsmotor und die Antriebseinheit gleichzeitig zum Antrieb des Fahrzeuges beitragen. Steuerfunktionen, die bisher im Motorsteuergerät des Verbrennungsmotors angesiedelt waren, sind nun in der Koordinierungseinheit untergebracht, die sowohl den Verbrennungsmotor als auch die zweite Antriebseinheit überwacht und steuert. Dabei können Probleme, die insbesondere beim Zu- und Abschalten des Verbrennungsmotors entstehen, koordiniert werden und unter Beachtung der Anforderungen des Hybridantriebes sehr schnell optimiert werden.

In einer Weiterbildung regelt die Koordinierungseinheit das Zusammenspiel zwischen Verbrennungsmotor und Elektromotor, indem durch die Koordinierungseinheit eine Drehmomentenabfrage ausgeführt wird und anschließend von der Koordinierungseinheit bestimmt wird, welcher Anteil am Drehmoment von dem Verbrennungsmotor und welcher Anteil am Drehmoment von der Antriebseinheit geliefert wird.

In einer Weiterbildung wird die Abgasrückführrate im Hybridbetrieb des Fahrzeuges in Abhängigkeit einer Rohabgasrückführrate des als Dieselmotor ausgebildeten Verbrennungsmotors ermittelt. Der Vorteil besteht darin, dass die für eine Steuereinheit des Dieselmotors vorhandene Parametrierung zur Steuerung der Abgasrückführrate eines konventionellen Fahrzeuges (ohne Hybridantrieb) ohne Änderungen in den Steuergeräte-Programmpaketen auch für ein Hybridfahrzeug verwendet werden kann. Das hat zur Folge, dass die Entwicklung spezieller Steuergeräte für den Dieselmotor im Hybridbetrieb entfällt. Es können somit die Steuergeräte verwendet werden, die für den Dieselmotor ohne Hybridantrieb entwickelt wurden, da die Korrektur der Abgasrückführrate für den Hybrid-Betrieb in der Koordinierungseinheit durchgeführt wird.

In einer Ausgestaltung der Erfindung wird die Abgasrückführrate in Abhängigkeit der Drehmomentenänderung über der Zeit ermittelt. Somit wird auch die Dynamik der Laständerung durch die Koordinierungseinheit erfasst, was eine schnelle Reaktion auf Veränderungen im Hybridbetrieb möglich macht. Daher ist die Regulierung der Emissionswerte auch in Betriebssituationen mit höherer Verbrennungsdynamik gut möglich, beispielsweise in Fällen, wo der Verbrennungsmotor sehr schnell zur zweiten Antriebseinheit zugeschaltet wird.

Bei einem besonders einfachen Aufbau wird der Verbrennungsmotor von einer eigenen Verbrennungsmotorsteuereinheit angesteuert, während die zweite Antriebseinheit von einer eigenständigen Antriebmotorsteuereinheit betrieben wird. Da die Koordinierungseinheit aber die emissionsrelevanten Funktionen des Verbrennungsmotors wahrnimmt, ist sie diesen Steuereinheiten übergeordnet. Die Verbrennungsmotorsteuereinheit und die Antriebsmotorsteuereinheit werden von der Koordinierungseinheit angesteuert, in dem die Koordinierungseinheit von ihr generierte Stellbefehle an die Verbrennungsmotorsteuereinheit und die Antriebsmotorsteuereinheit ausgibt. Somit wird Rechenleistung einer einzigen Steuereinheit verringert, indem sie auf die verschiedenen Steuereinheiten aufgeteilt wird.

In der Koordinierungseinheit können zusätzlich zu den Funktionen des Motormanagement aber auch noch andere Funktionen ausgeführt werden.
So wird von der Koordinierungseinheit neben emissionsrelevanten Funktionen mindestens eine Funktion der Fahrzeugsteuerung ausgeführt. In einer Ausführung sind die Funktionen zur Ansteuerung bzw. Regelung der Abgasrückführrate in einem Fahrzeugsteuergerät untergebracht.

In einer Vorrichtung zur Steuerung eines Fahrzeuges mit einem Hybridantrieb gemäß dem Patentanspruch 7, ist, um in allen Betriebszuständen des Hybridantriebes die Schadstoffemissionen möglichst gering zu halten, eine Koordinierungseinheit enthalten, die mindestens eine Steuerfunktion für den Verbrennungsmotor durchführt und die bestimmt, zu welchem Zeitpunkt der Verbrennungsmotor bzw. die Antriebseinheit allein oder der Verbrennungsmotor und die Antriebseinheit gleichzeitig zum Antrieb des Fahrzeuges beitragen. Die Koordinierungseinheit übernimmt somit Steuerfunktionen, die bisher im Motorsteuergerät des Verbrennungsmotors untergebracht waren. Um das Emissionsverhalten während des Hybridantriebes des Fahrzeuges einzustellen, führt die Koordinierungseinheit eine emissionsrelevante Steuerfunktion des Verbrennungsmotors aus, welche vorteilhafterweise die Bestimmung einer Abgasrückführrate ist.

Die Koordinierungseinheit führt eine Drehmomentenabfrage aus, um zu entscheiden, welcher Anteil am Drehmoment von dem Verbrennungsmotor und welcher Anteil am Drehmoment von der Antriebseinheit geliefert werden.

In einer Weiterbildung ist die Koordinierungseinheit als Fahrzeugsteuergerät ausgebildet, welches neben den Funktionen der Fahrzeugsteuerung auch Funktionen des Motormanagements des Verbrennungsmotors durchführt. Die Erfindung lässt zahlreiche Ausführungsformen zu. Eine davon soll anhand der in der Zeichnung dargestellten Figuren näher erläutert werden.

Es zeigt:

Figur 1: Steuergerätestruktur für einen konventionellen Dieselantrieb nach dem Stand der Technik

Figur 2: Ausführungsbeispiel für eine erweiterte Steuergerätestruktur für Fahrzeuge mit Hybridantrieb

Figur 3: Darstellung der Funktion zur Ansteuerung eines AGR-Ventils in einem Fahrzeugsteuergerät

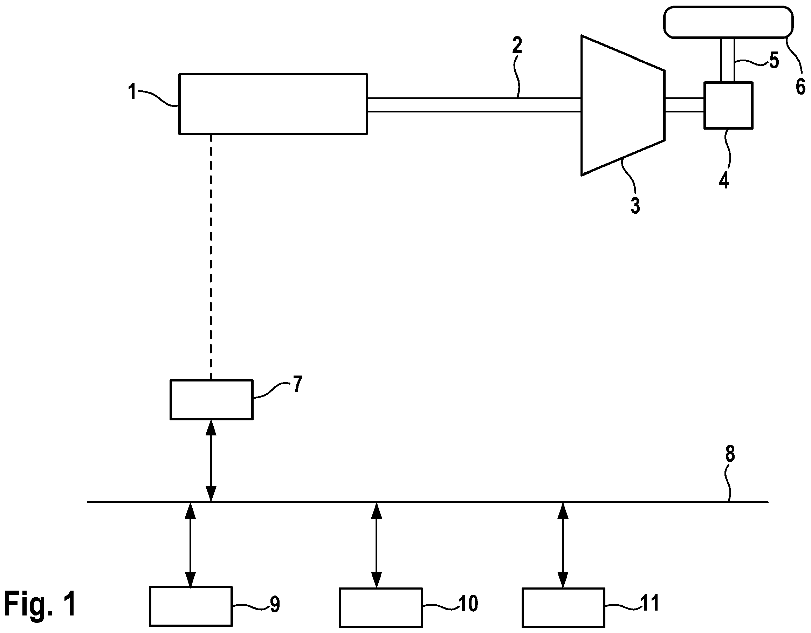

In Figur 1 ist eine Steuergerätestruktur für einen konventionellen Dieselantriebsstrang dargestellt. Der als Dieselmotor ausgebildete Verbrennungsmotor 1 ist über den Antriebsstrang 2 mit einem Getriebe 3 verbunden. Das Getriebe 3 wiederum ist über ein Differential 4 mit der Radachse 5 verbunden, welches das Rad 6 antreibt.

Der Dieselmotor 1 wird dabei über ein Motorsteuergerät (Electronic Diesel Control) 7 angesteuert. Das Motorsteuergerät 7 ist dabei der Rechner, der den Dieselmotor 1 gesamtheitlich steuert. Unter einer gesamtheitlichen Steuerung wird hier die Steuerung bzw. Regelung aller Komponenten am Dieselmotor 1 verstanden, die alle Aktuatoren und Stellorgane wie beispielsweise Injektoren des Einspritzsystems oder das AGR-Ventil umfasst.

Das Motorsteuergerät 7 kommuniziert über einen CAN-Bus 8 mit anderen ebenfalls mit einem Steuergerät ausgerüsteten Bauteilen des Fahrzeuges, die für den Fahrbetrieb notwendig sind. Zu diesen Bauteilen gehören ein Kompressor 9, eine Niedervoltbatterie 10 oder die Bremse 11, deren Steuergerät mit einem elektronischen Stabilitätsprogramm (ESP) arbeitet.

Die für die Abgabe der vom Dieselmotor 1 emittierten Abgase relevanten Bauteile, wie das Einspritzsystem und das AGR-Ventil, werden nach dem Stand der Technik ausschließlich von dem Motorsteuergerät 7 gesteuert bzw. geregelt.

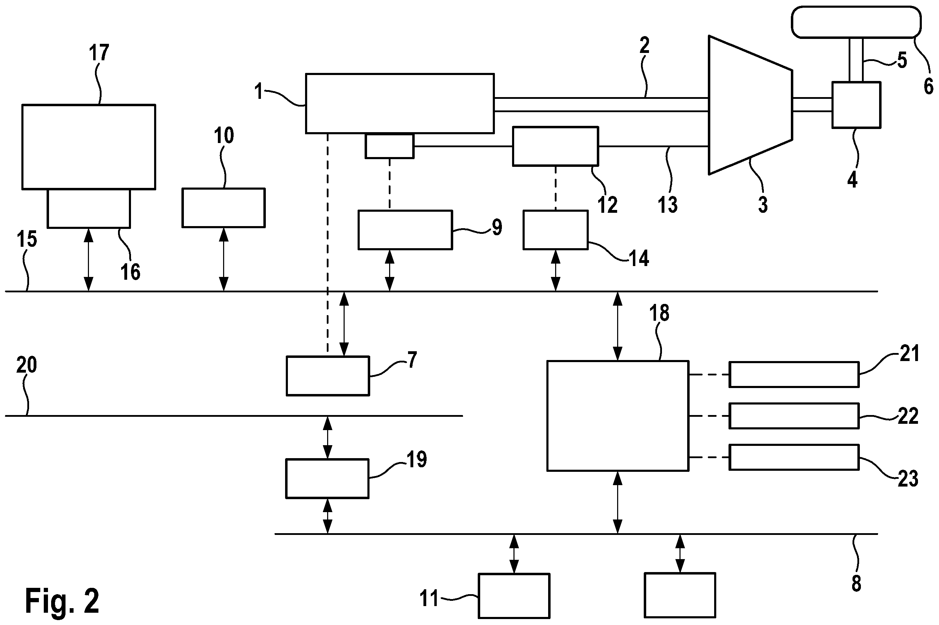

Figur 2 zeigt eine erweiterte Steuergerätestruktur für ein Fahrzeug mit einem Hybridantrieb. Der Hybridantrieb wird von einem Dieselmotor 1 als Verbrennungsmotor und einem Elektromotor 12 als zweite Antriebseinheit gebildet. Der Dieselmotor 1 ist, wie bereits beschrieben, über den Antriebsstrang 2 mit dem Getriebe 3 verbunden, welches wiederum über das Differential 4 auf die Radachse 5 zum Antrieb des Rades 6 führt.

Der Elektromotor 12 ist über einen eigenen Antriebsstrang 13 mit dem Getriebe 3 verbunden und trägt damit zum Antrieb der Räder 6 und zum Gesamtdrehmoment des Fahrzeuges bei. Darüber hinaus verfügt der Elektromotor 12 über ein eigenes Elektromotorsteuergerät 14, welches an einen Hybrid CAN-Bus 15 angeschlossen ist, über welchen alle die Steuergeräte miteinander kommunizieren, die Einfluss auf den Hybrid spezifischen Fahrbetrieb des Fahrzeuges haben. Dazu gehören das Batteriemanagementsystem 16 der Traktionsbatterie 17, die Niedervoltbatterie 10, der AC-Kompressor 9 (Wechselstrom-Kompressor) und weitere nicht weiter dargestellte Steuergeräte, die u.a. das Getriebe steuern. Das Motorsteuergerät 7 des Dieselmotors 1 ist ebenfalls mit dem Hybrid CAN Bus 15 verbunden.

Ein Fahrzeugsteuergerät 18 kommuniziert sowohl über den Hybrid CAN Bus 15 mit den daran angeschlossenen Steuergeräten, insbesondere dem Motorsteuergerät 7 und dem Elektromotorsteuergerät 14. Darüber hinaus ist es über den CAN Bus 8 mit dem Steuergerät der Bremse 11 verbunden. Über ein Gateway 19 steht der CAN Bus 8 mit einem Gateway CAN Bus 20 in Verbindung, über welchen die einzelnen Bussysteme des Fahrzeugs miteinander kommunizieren.

Das Fahrzeugsteuergerät 18 ist mit verschiedenen Gebern des Fahrzeuges, wie Fahrwertgeber 21, Temperaturgeber 22, der die Kühlwassertemperatur angibt und dem Spannungsmesser 23 der DC/ DC-Wandlung verbunden. Von diesen Gebern 21, 22, 23 erhält das Fahrzeugsteuergerät 18 Informationen über die aktuellen Betriebsparameter für den Fahrzeugbetrieb.

Im Fahrzeugsteuergerät 18 wird das Drehmoment des Abtriebs für das Hybridfahrzeug gesteuert. Zu diesem Zweck wertet das Fahrzeugsteuergerät 18 die von dem Fahrwertgeber 21 gelieferten Solldaten aus, die der Fahrer des Hybridfahrzeuges über das Fahrpedal einstellt. Dabei wird das für den Abtrieb relevante Drehmoment sowohl vom Dieselmotor 1 als auch vom Elektromotor 12 aufgebracht. Das Fahrzeugsteuergerät 18 arbeitet als Koordinierungseinheit und koordiniert die Beiträge, welche vom Dieselmotor 1 und vom Elektromotor 12 zum Drehmoment geleistet werden. Das Fahrzeugsteuergerät 18 ist somit sowohl dem Motorsteuergerät 7 als auch dem Elektromotorsteuergerät 14 übergeordnet.

Die für den Hybridbetrieb relevanten Funktionen zur Beeinflussung der Abgasemission sind im Fahrzeugsteuergerät 18 untergebracht. Der hybridspezifische Datenbestand hinsichtlich der Emission wird in den Hybrid spezifischen Funktionen des Fahrzeugsteuergerätes 18 abgelegt. Auf diese Weise kann der Datenbestand des Motorsteuergerätes 7 gegenüber einem konventionellen Anwendungsfall in einem Dieselfahrzeug unverändert bleiben. In Auswertung der emissionsspezifischen Funktionen gibt das Fahrzeugsteuergerät 18 Stellsignale an das Motorsteuergerät 7 und das Elektromotorsteuergerät 14 aus, welche mit dem jeweils erhaltenen Stellsignal die Aktuatoren ansteuern. So steuert das Motorsteuergerät 7 das AGR - Ventil nach Vorgaben des Fahrzeugsteuergerätes 18 an.

In Figur 2 sind das Motorsteuergerät 7 und das Fahrzeugsteuergerät 18 in getrennten Baueinheiten dargestellt. Die Funktionalitäten der Motorsteuerung und der Fahrzeugsteuerung können aber auch in einer Hardware zusammengefasst werden, ohne dass die beschriebenen Eigenschaften davon betroffen sind.

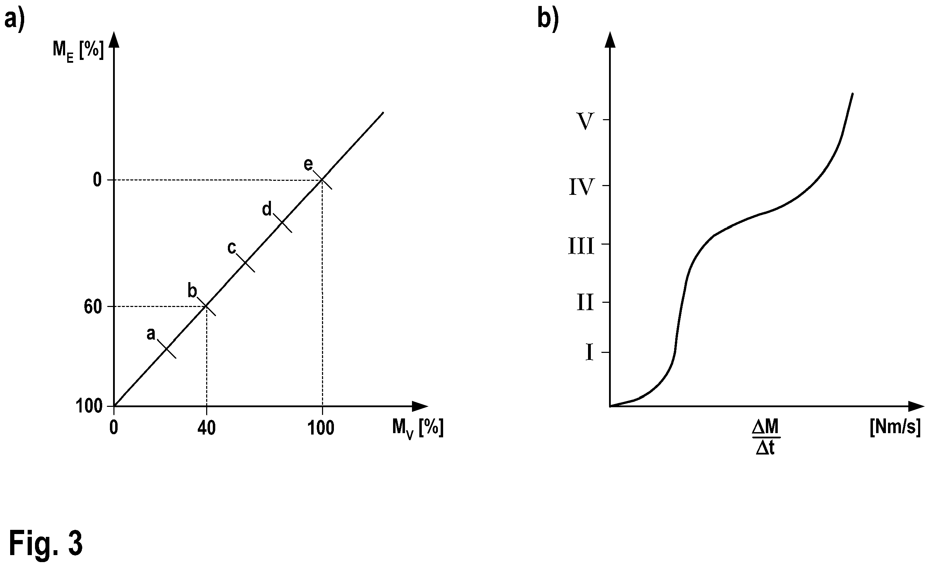

Mit Hilfe der in der Figur 3 dargestellten Diagramme soll dargestellt werden, wie in dem Fahrzeugsteuergerät 18 die Abgasrückführrate AGR für den Hybrid Betriebsfall bestimmt wird.

Im Fahrzeugsteuergerät 18 ist die unter a) dargestellte Tabelle abgelegt, in welcher aufgetragen ist, welchen Anteil $M_E$ der Elektromotor 12 und welchen Anteil $M_V$ der Verbrennungsmotor 1 am Gesamtdrehmoment des Fahrzeuges aufbringt. Die Anteile $M_E$ und $M_V$ sind in Prozent % ausgewiesen.

Der Drehmoment-Anteil $M_E$ des Elektromotors 12 und der Drehmoment-Anteil $M_V$ des Verbrennungsmotors 1 stehen dabei in einem linearen Verhältnis, da ihr Gesamtergebnis immer 100% ergeben muss.

Dabei wird in Abhängigkeit der Drehmomentenabgabe von Verbrennungsmotor 1 und Elektromotor 12 ein Faktor zur Veränderung der AGR-Ventilposition bestimmt.

Beträgt der Drehmoment-Anteil $M_E$ des Elektromotors 12 0 % und der Drehmoment-Anteil $M_V$ des Verbrennungsmotors 1100 % ergibt sich aus dem Diagramm in Figur 3a der Faktor e.

Ist der Hybrid- Betrieb in dem Zustand, dass der Elektromotor 12 einen Drehmoment- Anteil von $M_E = 60$ % ausgibt und der Verbrennungsmotor 1 40% zum Drehmoment liefert, wird der Faktor b in den weiteren Rechnungen berücksichtigt.

Der neue Wert $AGR_{neu}$ zur Ansteuerung des AGR-Ventils in bestimmten hybridrelevanten Betriebssituationen ergibt sich durch Multiplikation des aus Figur 3a bestimmten Faktors zur Korrektur des AGR-Ventilwertes mit dem Wert $AGR_{EDC}$, welcher in dem Motorsteuergerät 7 für den konventionellen Betrieb mit einem Dieselfahrzeug enthalten ist und auch als Rohabgasrückführrate bezeichnet werden kann.

$$AGR_{neu} = b \times AGR_{EDC}$$

In einer optimalen Ausgestaltung lassen sich die in dem Fahrzeugsteuergerät 18 hinterlegten Faktoren durch weitere Faktoren überlagern. So ist in Figur 3b) die Dynamik des Drehmomentensprunges $\Delta M$ in Abhängigkeit von der Zeit $\Delta t$ dargestellt, der in einigen hybridischen Betriebssituationen ebenfalls emissionsrelevant ist. Auch dieses Kennfeld ist in dem Fahrzeugsteuergerät abgelegt und wird ständig aktualisiert.

Je nachdem in welchem Abschnitt sich die Drehmomentenänderung über der Zeit $\Delta M/\Delta t$ gerade befindet, wird hier ebenfalls ein Korrekturfaktor, beispielsweise iv, zugeordnet, der in die o.g. Gleichung als weiterer Multiplikator einfließt. Die Gleichung erhält somit folgende Form:

$$AGR_{neu} = b \times iv \times AGR_{EDC}$$

Auf Grund dieses Verfahrens ist eine minimale Schadstoffemission bei allen Betriebszuständen des Hybrid-Betriebes gewährleistet, da dieses Verfahren nicht nur für die Einstellung der Abgasrückführrate sondern prinzipiell auch für alle anderen emissionsrelevanten Funktionen anwendbar ist.

**Patentansprüche**

1. Verfahren zur Steuerung eines Fahrzeuges mit einem Hybridantrieb, welches mit einem als erste Antriebseinheit ausgebildeten Verbrennungsmotor und einer zweiten Antriebseinheit angetrieben wird, wobei der Verbrennungsmotor und die zweite Antriebseinheit einzeln oder gemeinsam zum Antrieb des Fahrzeuges beitragen und mindestens eine Steuerfunktion für den Verbrennungsmotor von einer Koordinierungseinheit (18) durchgeführt wird, welche bestimmt, zu welchem Zeitpunkt der Verbrennungsmotor (1) bzw. die Antriebseinheit (12) allein oder der Verbrennungsmotor (1) und die Antriebseinheit (12) gleichzeitig zum Antrieb des Fahrzeuges beitragen, wobei zumindest während des Hybridbetriebes des Fahrzeuges mindestens eine emissionsrelevante Steuerfunktion des Verbrennungsmotors (1) von der Koordinierungseinheit (18) ausgeführt wird und dass eine Bestimmung einer Abgasrückführrate als emissionsrelevante Funktion in der Koordinierungseinheit (18) ausgeführt wird **dadurch gekennzeichnet, dass** die Abgasrückführrate in Abhängigkeit vom Beitrag des Verbrennungsmotors (1) und vom Beitrag der Antriebseinheit (12) zum Fahrzeugdrehmoment bestimmt wird.

2. Verfahren nach Anspruch 1 **dadurch gekennzeichnet, dass** durch die Koordinierungseinheit (18) eine Drehmomentenabfrage ausführt wird und anschließend von der Koordinierungseinheit (18) bestimmt wird, welcher Anteil am Drehmoment von dem Verbrennungsmotor (1) und welcher Anteil am Drehmoment von der Antriebseinheit (12) geliefert wird.

3. Verfahren nach Anspruch 1 **dadurch gekennzeichnet, dass** die Abgasrückführrate im Hybridbetrieb des Fahrzeuges in Abhängigkeit einer Rohabgasrückführrate des als Dieselmotor ausgebildeten Verbrennungsmotors (1) ermittelt wird.

4. Verfahren nach Anspruch 1 oder 3- **dadurch gekennzeichnet, dass** die Abgasrückführrate in Abhängigkeit der Drehmomentenänderung über der Zeit ermittelt wird.

5. Verfahren nach einem der vorhergehenden Ansprüche **dadurch gekennzeichnet, dass** eine Verbrennungsmotorsteuereinheit (7) und eine Antriebmotorsteuereinheit (14) von der Koordinierungseinheit (18) angesteuert werden.

6. Verfahren einem der vorhergehenden Ansprüche **dadurch gekennzeichnet, dass** von der Koordinierungseinheit (18) mindestens eine Funktion der Fahrzeugsteuerung ausführt wird.

7. Vorrichtung zur Steuerung eines Fahrzeuges mit einem Hybridantrieb, welches mit einem als erste Antriebseinheit ausgebildeten Verbrennungsmotor und einer zweiten Antriebseinheit angetrieben wird, wobei der Verbrennungsmotor und die zweite Antriebseinheit einzeln oder gemeinsam zum Antrieb des Fahrzeuges beitragen und eine Koordinierungseinheit (18) enthalten ist, die mindestens eine Steuerfunktion für den Verbrennungsmotor (1) durchführt und welche bestimmt, zu welchem Zeitpunkt der Verbrennungsmotor (1) bzw. die Antriebseinheit (12) allein oder der Verbrennungsmotor (1) und die Antriebseinheit (12) gleichzeitig zum Antrieb des Fahrzeuges beitragen, wobei die Koordinierungseinheit (18) eine emissionsrelevante Steuerfunktion des Verbrennungsmotors (1) ausführt und die Koordinierungseinheit (18) als emissionsrelevante Funktion eine Abgasrückführrate bestimmt, **dadurch gekennzeichnet,** dass die Abgasrückführrate in Abhängigkeit vom Beitrag des Verbrennungsmotors (1) und vom Beitrag der Antriebseinheit (12) zum Fahrzeugdrehmoment bestimmt wird.

8. Vorrichtung nach Anspruch **7 dadurch gekennzeichnet, dass** die Koordinierungseinheit (18) eine Drehmomentenabfrage ausführt und bestimmt, welcher Anteil am Drehmoment von dem Verbrennungsmotor (1) und welcher Anteil am Drehmoment von der Antriebseinheit (12) geliefert wird.

9. Vorrichtung nach einem der vorhergehenden Ansprüche 7 bis 8 **dadurch gekennzeichnet, dass** die mindestens eine Funktion der Fahrzeugsteuerung ausführende Koordinierungseinheit (18) eine Verbrennungsmotorsteuereinheit (7) und eine Antriebsmotorsteuereinheit (14) ansteuert.

## Claims

1. Method for controlling a vehicle with a hybrid drive, which is driven with an internal combustion engine, in that it is a first drive unit, and with a second drive unit, wherein the internal combustion engine and the second drive unit contribute individually or together to driving the vehicle, and at least one control function for the internal combustion engine is carried out by a coordination unit (18) which determines the time at which the internal combustion engine (1) or the drive unit (12) contributes alone to driving the vehicle, or the internal combustion engine (1) and the drive unit (12) contribute simultaneously to driving the vehicle, wherein at least during the hybrid mode of the vehicle at least one emission-relevant control function of the internal combustion engine (1) is carried out by the coordination unit (18), and in that an exhaust gas recirculation rate is determined as an emission-relevant function in the coordination unit (18), **characterized in that** the exhaust gas recirculation rate is determined as a function of the contribution of the internal combustion engine (1) and of the contribution of the drive unit (12) to the vehicle torque.

2. Method according to Claim 1, **characterized in that** a torque request is made by the coordination unit (18), and the coordination unit (18) subsequently determines which portion of the torque is supplied by the internal combustion engine (1) and which portion of the torque is supplied by the drive unit (12).

3. Method according to Claim 1, **characterized in that** the exhaust gas recirculation rate in the hybrid mode of the vehicle is determined as a function of a raw gas exhaust gas recirculation rate of the internal combustion engine (1) which is embodied as a diesel engine.

4. Method according to Claim 1 or 3, **characterized in that** the exhaust gas recirculation rate is determined as a function of the change in the torque over time.

5. Method according to one of the preceding claims, **characterized in that** an internal combustion engine control unit (7) and a drive motor control unit (14) are actuated by the coordination unit (18).

6. Method according to one of the preceding claims, **characterized in that** the coordination unit (18) carries out at least one function of the vehicle control.

7. Device for controlling a vehicle with a hybrid drive, which is driven with an internal combustion engine, embodied as a first drive unit, and a second drive unit, wherein the internal combustion engine and the second drive unit contribute individually or together to driving the vehicle, including a coordination unit (18) which carries out at least one control function for the internal combustion engine (1) and determines the time at which the internal combustion engine (1) or the drive unit (12) contributes alone to driving the vehicle, or the internal combustion engine (1) and the drive unit (12) contribute simultaneously to driving the vehicle, wherein the coordination unit (18) carries out an emission-relevant control function of the internal combustion engine (1), and the coordination unit (18) determines an exhaust gas recirculation rate as an emission-relevant function, **characterized in that** the exhaust gas recirculation rate is determined as a function of the contribution of the internal combustion engine (1) and of the contribution of the drive unit (12) to the vehicle torque.

8. Device according to Claim 7, **characterized in that** the coordination unit (18) makes a torque request and determines which portion of the torque is supplied by the internal combustion engine (1) and which portion of the torque is supplied by the drive unit (12).

9. Device according to one of the preceding Claims 7 to 8, **characterized in that** the coordination unit (18) which carries out at least one function of the vehicle control actuates an internal combustion engine control unit (7) and a drive motor control unit (14).

**Revendications**

1.  Procédé pour la commande d'un véhicule à entraînement hybride, qui est entraîné avec un moteur à combustion interne constituant une première unité d'entraînement et avec une deuxième unité d'entraînement, dans lequel le moteur à combustion interne et la deuxième unité d'entraînement contribuent isolément ou en commun à l'entraînement du véhicule et au moins une fonction de commande pour le moteur à combustion interne est exécutée par une unité de coordination (18), qui détermine à quel instant le moteur à combustion interne (1) ou l'unité d'entraînement (12) seul(e) ou le moteur à combustion interne (1) et l'unité d'entraînement (12) simultanément contribuent à l'entraînement du véhicule, dans lequel au moins pendant le fonctionnement hybride du véhicule au moins une fonction de commande du moteur à combustion interne (1) relative aux émissions est exécutée par l'unité de coordination (18) et une détermination d'un taux de recyclage de gaz d'échappement est effectuée en tant que fonction de commande relative aux émissions dans l'unité de coordination (18), **caractérisé en ce que** l'on détermine le taux de recyclage de gaz d'échappement en fonction de la contribution du moteur à combustion interne (1) et de la contribution de l'unité d'entraînement (12) au couple moteur du véhicule.

2.  Procédé selon la revendication 1, **caractérisé en ce que** l'on effectue au moyen de l'unité de coordination (18) une interrogation du couple moteur et on détermine ensuite, au moyen de l'unité de coordination (18), quelle part du couple moteur est fournie par le moteur à combustion interne (1) et quelle part du couple moteur est fournie par l'unité d'entraînement (12).

3.  Procédé selon la revendication 1, **caractérisé en ce que** l'on détermine le taux de recyclage de gaz d'échappement en fonctionnement hybride du véhicule en fonction d'un taux de recyclage de gaz d'échappement brut du moteur à combustion interne (1) constitué par un moteur Diesel.

4.  Procédé selon la revendication 1 ou 3, **caractérisé en ce que** l'on détermine le taux de recyclage de gaz d'échappement en fonction de la variation du couple moteur au cours du temps.

5.  Procédé selon l'une quelconque des revendications précédentes, **caractérisé en ce qu'**une unité de commande du moteur à combustion interne (7) et une unité de commande du moteur d'entraînement (14) sont commandées par l'unité de coordination (18).

6.  Procédé selon l'une quelconque des revendications précédentes, **caractérisé en ce qu'**au moins une fonction de la commande du véhicule est exécutée par l'unité de coordination (18).

7.  Dispositif pour la commande d'un véhicule à entraînement hybride, qui est entraîné par un moteur à combustion interne constituant une première unité d'entraînement et par une deuxième unité d'entraînement, dans lequel le moteur à combustion interne et la deuxième unité d'entraînement contribuent isolément ou en commun à l'entraînement du véhicule, et qui comporte une unité de coordination (18), qui exécute au moins une fonction de commande pour le moteur à combustion interne (1) et qui détermine à quel instant le moteur à combustion interne (1) ou l'unité d'entraînement (12) seul(e) ou le moteur à combustion interne (1) et l'unité d'entraînement (12) simultanément contribuent à l'entraînement du véhicule, dans lequel l'unité de coordination (18) exécute une fonction de commande du moteur à combustion interne (1) relative aux émissions et l'unité de coordination (18) détermine un taux de recyclage de gaz d'échappement en tant que fonction relative aux émissions, **caractérisé en ce que** le taux de recyclage de gaz d'échappement est déterminé en fonction de la contribution du moteur à combustion interne (1) et de la contribution de l'unité d'entraînement (12) au couple moteur du véhicule.

8.  Dispositif selon la revendication 7, **caractérisé en ce que** l'unité de coordination (18) effectue une interrogation du couple moteur et détermine quelle part du couple moteur est fournie par le moteur à combustion interne (1) et quelle part du couple moteur est fournie par l'unité d'entraînement (12).

9.  Dispositif selon l'une quelconque des revendications précédentes 7 à 8, **caractérisé en ce que** l'unité de coordination (18) exécutant au moins une fonction de la commande du véhicule commande une unité de commande du moteur à combustion interne (7) et une unité de commande du moteur d'entraînement (14).

Fig. 1

EP 2 254 781 B1

Fig. 2

EP 2 254 781 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060270519 A1
- WO 2005012022 A1
- US 20030160455 A1